**Europäisches Patentamt**

**European Patent Office**

**Office européen des brevets**

(19)

(11) Veröffentlichungsnummer : **0 336 089 B1**

(12) # EUROPÄISCHE PATENTSCHRIFT

(45) Veröffentlichungstag der Patentschrift :
**13.11.91 Patentblatt 91/46**

(51) Int. Cl.⁵ : **F16B 15/08**

(21) Anmeldenummer : **89102923.3**

(22) Anmeldetag : **20.02.89**

(54) **Trägerstreifen.**

(30) Priorität : **02.03.88 DE 3806624**

(43) Veröffentlichungstag der Anmeldung :
**11.10.89 Patentblatt 89/41**

(45) Bekanntmachung des Hinweises auf die
Patenterteilung :
**13.11.91 Patentblatt 91/46**

(84) Benannte Vertragsstaaten :
**CH DE FR GB LI SE**

(56) Entgegenhaltungen :
**EP-A- 0 237 476**

(56) Entgegenhaltungen :
**AT-B- 330 696**
**AT-B- 338 711**
**FR-A- 2 145 930**
**FR-A- 2 176 401**
**FR-A- 2 254 408**

(73) Patentinhaber : **HILTI Aktiengesellschaft**
**FL-9494 Schaan (LI)**

(72) Erfinder : **Pfister, Norbert**
**St. Galler Strasse 31**
**CH-9470 Buchs (CH)**

(74) Vertreter : **Wildi, Roland**
**Hilti Aktiengesellschaft Patentabteilung**
**FL-9494 Schaan (LI)**

EP 0 336 089 B1

## Beschreibung

Die Erfindung betrifft einen Trägerstreifen für pulverkraftbetriebene Setzgeräte, mit in gleichmässigen Abständen zueinander angeordneten Aufnahmebohrungen, in denen Nägel verschiebbar gelagert sind, wobei die Nägel einen Kopf und einen Schaft mit zumindest einem, der Lagerung der Nägel in den Aufnahmebohrungen dienendem Führungskörper aufweisen, wobei der Aussendurchmesser des Kopfes höchstens dem Innendurchmesser der Aufnahmebohrungen entspricht.

Aus der DE-A-2151051 ist ein Trägerstreifen mit in Aufnahmebohrungen gelagerten Nägeln bekannt. Die Nägel werden durch einen auf dem Schaft angeordneten Führungskörper reibschlüssig in den Aufnahmebohrungen gehalten. Für den Setzvorgang werden die Nägel von einem geräteseitigen Treibkolben einzeln aus dem Trägerstreifen gestossen. Der von den Nägeln befreite Trägerstreifen verlässt den Lauf des Gerätes über eine Austrittsöffnung.

Dieser bekannte Trägerstreifen bedarf einer aufwendigen Ausbildung für den Angriff einer geräteseitigen Transport- und Arretiereinrichtung. Zudem besteht ein Nachteil darin, dass die Positionierung des Trägerstreifens unabhängig vom Vorhandensein eines Nagels in der Aufnahmebohrung erfolgt. Dies birgt die grosse Gefahr in sich, dass bei allenfalls fehlendem Nagel der Treibkolben einen Leerhub ausführt, was zu Beschädigungen sowohl am Gerät als auch am Untergrund, in welchen die Nägel gesetzt werden sollen, führen kann.

Aus der FR-A-2176401 ist ein Trägerstreifen bekannt, in welchem Köpfe aufweisende Nägel über Führungskörper gehaltert sind. Die kopfseitige Oberfläche des Trägerstreifens wird sowohl von den Führungskörpern als auch von den Nägeln überragt.

Um zu erkennen, ob in diesem weiterhin bekannten Trägerstreifen ein Nagel vorhanden ist, bedarf es wiederum aufwendiger, geräteseitiger Massnahmen. Einfache geräteseitige Anschlagmittel helfen hier nicht, da solche aufgrund der die Oberfläche des Trägerstreifens überragenden Führungskörper selbst bei Fehlen eines Nagels in Aktion treten würden. Die Gefahr von Geräteschädigungen ist somit auch bei Verwendung dieses weiteren bekannten Trägerstreifens gegeben, wenn nicht ausserordentlich aufwendige geräteseitige Erkennungsvorrichtungen vorgesehen werden.

Der Erfindung liegt die Aufgabe zugrunde, einen Trägerstreifen zu schaffen, der die Verwendung einer einfachen, geräteseitigen Transport- und Arretiereinrichtung ermöglicht und das Auftreten von Leerhüben des Treibkolbens unterbindet.

Erfindungsgemäss wird die Aufgabe dadurch gelöst, dass der Lagerung der Nägel zwei axial zueinander beabstandete, innerhalb der Aufnahmebohrungen angeordnete Führungskörper dienen und die Nägel derart angeordnet sind, dass die kopfseitige Oberfläche des Trägerstreifens zumindest vom Kopf in der Höhe überragt wird.

Die Köpfe der Nägel können so unter Auflaufen an einem vorzugsweise am Lauf befindlichen, geräteseitigen Anschlag zur Positionierung des Trägerstreifens genutzt werden. Der Kopf wirkt mit dem Anschlag so zusammen, dass nach erfolgtem Transporthub des Ladeststreifens — beispielsweise mit Hilfe eines federbelasteten Schiebers — der mit dem Kopf am Anschlag auflaufende Nagel in der Laufachse liegt. Befindet sich in einer der Aufnahmebohrungen kein Nagel, so läuft der Trägerstreifen in Transportrichtung weiter bis zum nächsten Nagelkopf, wobei der von Nägeln befreite Teil des Magazinstreifens den Lauf über eine Austrittsöffnung verlässt. Auf diese Weise ist gewährleistet, dass nach jedem Magazintransport ein Nagel in der Laufbohrung ist, so dass Leerhübe des Treibkolbens unterbunden werden.

Der Führung und Halterung der Nägel in den Aufnahmebohrungen können beispielsweise zwei hintereinander auf dem Schaft angeordnete scheibenförmige Führungskörper dienen. Die Haltekraft kann durch Nutzung der Elastizität des zweckmässig aus Kunststoff bestehenden Trägerstreifens aufgebracht werden.

Vorzugsweise überragen die Nägel mit dem kopfseitig an den Führungskörper anschliessenden Bereich die Oberfläche des Trägerstreifens, wobei unter diesem Bereich nebst dem Kopf auch der in Setzrichtung anschliessende Teil des Nagels verstanden wird. Dieser anschliessende Teil kann beispielsweise durch eine bogenförmige Verjüngung oder durch eine Kegelzone gebildet sein. Auf diese Weise wird auch bei Nägeln mit sehr kleiner Höhe des Kopfes ein Ueberstand erzielt, so dass das Zusammenwirken mit dem geräteseitigen Anschlag auch bei toleranzmässig grosszügiger Auslegung der Führung des Trägerstreifens im Gerät ohne Funktionsbeeinträchtigung gewährleistet ist.

Die Erfindung wird nachstehend anhand einer Zeichnung, die ein Ausführungsbeispiel wiedergibt, näher erläutert. Es zeigen :

Fig. 1     einen Trägerstreifen mit Nägeln, teilweise im Schnitt ;
Fig. 2     den Trägerstreifen nach Fig. 1 im Grundriss.

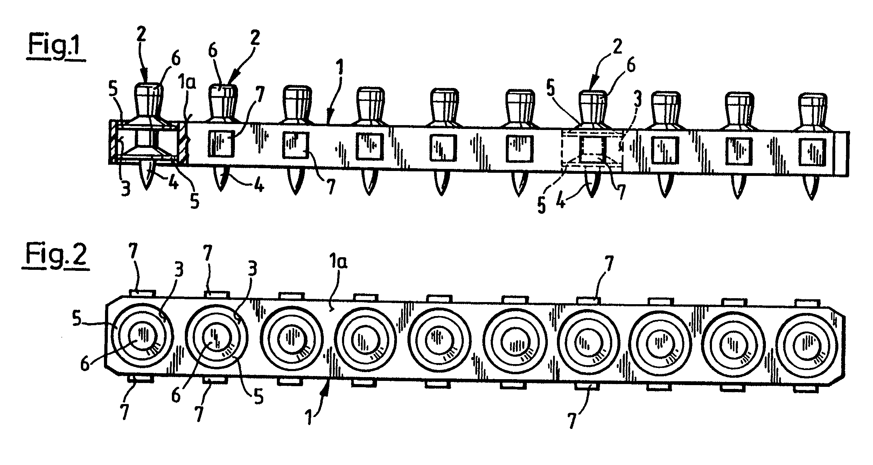

In dem in Fig. 1 dargestellten Trägerstreifen 1 sind in dessen Längsrichtung zueinander gleichmässig beabstandet Nägel 2 angeordnet. Die Nägel 2 sind in Aufnahmebohrungen 3 des Trägerstreifens 1 gelagert. Hierzu trägt ein Schaft 4 der Nägel 2 zueinander axial beabstandet zwei scheibenförmige Führungskörper 5. Diese sitzen unter Vorspannung in den Aufnahmebohrungen 3 des aus Kunststoff bestehenden Trägerstreifens. Die Nägel 2 verfügen ferner über einen Kopf 6, der mit dem bis zum kopfseitigen Führungskörper 5 sich erstreckenden Bereich die Oberfläche 1a des Trägerstreifens überragt.

Wie der Fig. 1 in Verbindung mit der Fig. 2 entnommen werden kann, weist der Trägerstreifen 1 dessen beide Seitenflächen überragende Vorsprünge 7 mit quadratischem Querschnitt auf. Die Vorsprünge stehen entlang der Seitenflächen in gleichem Abstand wie die Nägel 2. Im Verwendungseinsatz des Trägerstreifens 1 wird jeweils ein Nagel 2 von einem Treibkolben eines Setzgerätes aus der jeweiligen Aufnahmebohrung 3 ausgestossen. Der Trägerstreifen 1 wird alsdann in dessen Längsrichtung weitertransportiert, bis der nächste Nagel 2 an einem geräteseitigen Anschlag aufläuft. Für den Transport des Trägerstreifens 1 kann ein geräteseitiger federbelasteter Schieber vorgesehen sein, der endseitig oder über die Vorsprünge 7 auf den Trägerstreifen einwirkt.

## Patentansprüche

1. Trägerstreifen (1) für pulverkraftbetriebene Setzgeräte, mit in gleichmässigen beständen zueinander angeordneten Aufnahmebohrungen (3), in denen Nägel (2) verschiebbar gelagert sind, wobei die Nägel (2) einen Kopf (6) und einen Schaft (4) mit zumindest einem, der Lagerung der Nägel (2) in den Aufnahmebohrungen (3) dienen-dem Führungskörper (5) aufweisen, wobei der Aussendurchmesser des Kopfes (6) höchstens dem Innendurchmesser der Aufnahmebohrungen (3) entspricht, **dadurch gekennzeichnet**, dass der Lagerung der Nägel (2) zwei axial zueinander beabstandete, innerhalb der Aufnahmebohrungen (3) angeordnete Führungskörper (5) dienen und die Nägel (2) derart angeordnet sind, dass die kopfseitige Oberfläche des Trägerstreifens (1) zumindest vom Kopf (6) in der Höhe überragt wird.

2. Trägerstreifen nach Anspruch 1, dadurch gekennzeichnet, dass die Nägel (2) mit dem kopfseitig an den Führungskörper (5) anschliessenden Bereich die Oberfläche (1a) des Trägerstreifens (1) überragen.

## Claims

1. A carrier strip (1) for explosive-powered setting tools having reception bores (3) which are arranged at uniform spacings from one another and in which nails (2) are mounted so as to be displaceable, in which respect the nails (2) have a head (6) and a shank (4) having at least one guide body (5) serving for the mounting of the nails (2) in the reception bores (3), in which respect the outside diameter of the head (6) corresponds at the most to the inside diameter of the reception bores (3), characterised in that two guide bodies (5) which are axially spaced apart from one another and are arranged inside the reception bores (3) serve for the mounting of the nails and the nails (2) are arranged in such a way that at least the head (6) projects vertically above the head-sided upper surface of the carrier strip (1).

2. A carrier strip according to claim 1, characterised in that the nails (2) project above the upper surface (1a) of the carrier strip (1) with the region which at the head side adjoins the guide body (5).

## Revendications

1. Support en forme de ruban (1) pour des outils de scellement actionnés par l'énergie de la poudre, comprenant des alésages de réception (3) disposés à des intervalles réguliers et dans lesquels sont placés des clous (2) de manière mobile, lesdits clous (2) présentant une tête (6) et une tige (4) avec au moins un corps de guidage (5) assurant la mise en place des clous (2) dans les alésages de réception (3), le diamètre extérieur de la tête (6) correspondant au plus au diamètre intérieur des alésages de réception (3), caractérisé en ce que la mise en place des clous (2) est assurée par deux corps de guidage (5) disposés à distance axiale l'un de l'autre à l'intérieur des alésages de réception (3), et que les clous (2) sont disposés de telle façon que la surface du support (1) en forme de bande située du côté tête est dépassée en hauteur au moins par la tête (6).

2. Support en forme de ruban selon la revendication 1, caractérisé en ce que la partie des clous (2) faisant suite aux corps de guidage (5), du côté tête, dépasse de la surface (1a) du support (1) en forme de bande.

3

Fig.1

Fig.2